# EUROPEAN PATENT APPLICATION

(11) **EP 2 367 255 A1**
(43) Date of publication of application: **21.09.2011**
(21) Application number: 11425060.8
(22) Date of filing: 11.03.2011
(51) Int. Cl.: H02J 3/32, B60L 11/18

(54) **Energy supply plant for electric traction vehicles**

(30) Priority: 16.03.2010 IT VI20100070
(71) Applicant: Beghelli S.p.A., 40050 Monteveglio (BO) (IT)
(72) Inventor: Beghelli, Gian Pietro, 40050 Monteveglio (BO) (IT)
(74) Representative: Iannone, Carlo Luigi

(57) **Abstract**

An energy supply plant for electric traction vehicles, comprising an electric traction vehicle (4), connected with a domestic power system (8), with which the household electric appliances (10) are connected; the domestic power system (8) is, in turn, connected with a low-voltage public power system (7) and the electric (4) is electrically connected with a measure device (1, 24) of the recharge energy of the traction battery (36), supplied by the domestic power system (8) and suitable to measure the amount of energy supplied to the traction battery (36) and consumed by the electric vehicle (4). The domestic power system (7) is connected with a photovoltaic plant (9, 11), which supplies energy and manages the delivery of the energy to the public power system (7), through an electronic control unit (12) which measures the produced amount of energy.

## Description

The present invention generically refers to an energy supply plant of electric traction vehicles.

More in particular, the invention concerns an energy supply plant, which can be mounted for example in domestic circle, for electric traction vehicles, wherein the energy source is a photovoltaic generator connected with the low voltage power system.

The invention also concerns a respective system of analysis and recording of the energy flows for measuring and reckoning the energy saved by the electric vehicles while operating, compared to a vehicle of equivalent performances powered by fossil fuel.

The electric car is able to exploit energy with high energy efficiency; it follows that one of the optimal synergies with the electric car is the combination with electricity generation systems from renewable sources, which can be used for recharging batteries, such as, in particular, photovoltaic generation systems.

Purpose of the present invention is indeed to provide an energy supply plant for electric traction vehicles which allows to optimize the management of the supply of energy, for example of electric cars.

Another purpose of the invention is to create an energy supply plant for electric traction vehicles which can be installed in domestic circle.

Another purpose of the present invention is to provide an energy supply plant for electric traction vehicles, in which the energy source to recharge the battery consists of a photovoltaic generator connected with the low voltage power system.

Further purpose of the invention is to carry out an energy supply plant for electric traction vehicles which also provides a system for measuring and reckoning the energy saved by the electric vehicle while operating, compared to a vehicle of equivalent performances powered by fossil fuels.

These and other purposes, according to the present invention, are achieved by implementing an energy supply plant of electric traction vehicles as the attached claim 1.

Other technical features of detail are described in the subsequent claims.

In advantageous way, the supply plant of the invention allows to accurately reckon the energy balances of a photovoltaic plant combined with a recharging system of an electric traction vehicle (and, in particular, of an electric car) and a management system of the domestic electrical appliances, optimizing the management of the energy available for the operation of the aforesaid domestic electrical appliances.

Moreover, the plant allows to create a system for emergency supply of the domestic appliances in case of power failure, exploiting the battery of the electrically powered vehicle, as well as to create a system that integrates the peak power needed to operate all the domestic appliances also simultaneously, over and above the contractual limits, by using the energy possibly available in the vehicle battery.

Finally, the supply plant in question allows to manage the operation and recharging of a set of electric vehicles, through a plurality of domestic energy dispensers, all networked together through a proper telematic system that allows the centralized management of the measures and the distribution of the debits in proportion to the actual consumptions and the contractual definitions, in differentiate kind for each single user.

Further features and advantages of an energy supply plant for electric traction vehicles, according to the current invention, will be more evident from the description that follows, related to an its illustrative and preferred, but not limiting, embodiment and from the appended drawings, in which:
- figure 1 shows a first block diagram of the energy supply plant for electric traction vehicles, according to the present invention, showing the external devices related to the generation, charge and measure system applied to an electric car and the photovoltaic generator;
- figure 2 shows a second block diagram of the energy supply plant for electric traction vehicles, including the generation, charge and measure system applied to an electric car, in a version integrating a "booster" functionality for managing the domestic appliances, according to the present invention;
- figure 3 shows a block diagram of an electric traction vehicle and, in particular, an electric car, which highlights a measure and reckon application of the energy saved in the performance of the electric car and a management system of the battery charger belonging to the energy supply plant for electric traction vehicles, according to the present invention;
- figure 4 shows a scheme relating to a series of stations or distributors (garages) of electricity for the recharging, connected with a service centre for the management of the total service of energy reckoning and belonging to the energy supply plant for electric traction vehicles, according to the present invention;
- figure 5 shows a block diagram of a portable terminal used in the energy supply plant for electric traction vehicles, according to the present invention;
- figure 6 shows a block diagram of an inverter-booster device used in the energy supply plant for electric traction vehicles according to the invention;
- figure 7 shows a block diagram of a breaker-meter circuit used in the energy supply plant for electric traction vehicles according to the invention.

Referring to the figures mentioned, the energy supply plant for electric traction vehicles, which is the object of the present invention, essentially consists of a meter 1 of the recharge energy of the battery of the electric vehicle (for example an electric car 4) equipped with radio interface, powered by the domestic power system 8 (connected in turn with the low voltage public power system 7 and with which the domestic electric appliances 10 are connected) and provided with a supply socket 2 for the connection with the electric car 4 too; the electric car 4 includes a saved energy meter or saving count 5, equipped with radio interface.

The electric car is equipped with an electric plug 3 for the connection with the supply socket 2 for the recharging.

The plant further comprises a portable terminal 6, a series of photovoltaic modules 9, which provide energy to a photovoltaic inverter 11 provided with radio interface, an electronic breaker circuit 12, provided with radio interface, which manages the delivery of the photovoltaic plant energy to the public power system 7 (connecting and disconnecting the plant according to the technical standards imposed by the power system common carrier himself), a fiscal counter 13 of the energy introduced into the domestic power system 8 by the photovoltaic plant and a fiscal counter 14 of energy drawn from the public power system 7.

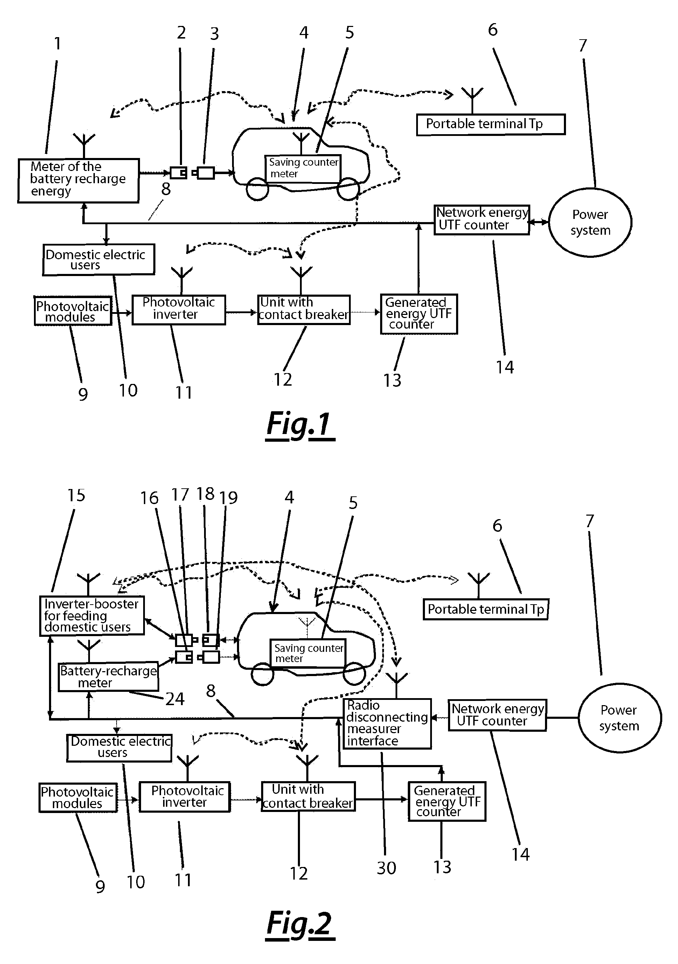

Figure 2 shows a block diagram of an energy supply plant similar to that one of previous figure 1, having booster functionality, comprising a meter 24 of the battery recharge energy, equipped with radio interface, powered by the public power system 8 and provided with a supply socket 16 for the connection with the electric car 4, a domestic inverter-booster 15, equipped with radio interface, which can drawn electricity from electric car 4 battery, through the plug 17, in order to introduce it into the domestic power supply 8.

The electric car 4 integrates the saving count 5, provided with radio interface.

Furthermore, the electric car 4 is equipped with an electric plug 19 for the connection with the energy source for the charging and an electric socket 18 for connecting the inner battery with the inverter-booster 15, while the supply plant also includes the portable terminal 6, the low voltage public power system 7, the domestic electric appliances 10, connected with the public power system 8, the photovoltaic modules 9, which provide energy to the photovoltaic inverter 11, equipped with radio interface, the electronic breaker circuit 12, equipped with radio interface, which manages the delivery of the energy of the photovoltaic plant to the public power system 7, connecting and disconnecting the plant according to the technical standards imposed by the power system common carrier itself, the fiscal counter 13 of the energy introduced into the domestic power system 8 by the photovoltaic plant, the fiscal counter 14 of the energy drawn from the public power system 7, a breaker-meter circuit 30, equipped with radio interface necessary to section the domestic electric plant when in island operation is expected, whereby the photovoltaic generator supplies, along with the inverter-booster 15, the domestic appliances 10 without them being connected with the public power system 7.

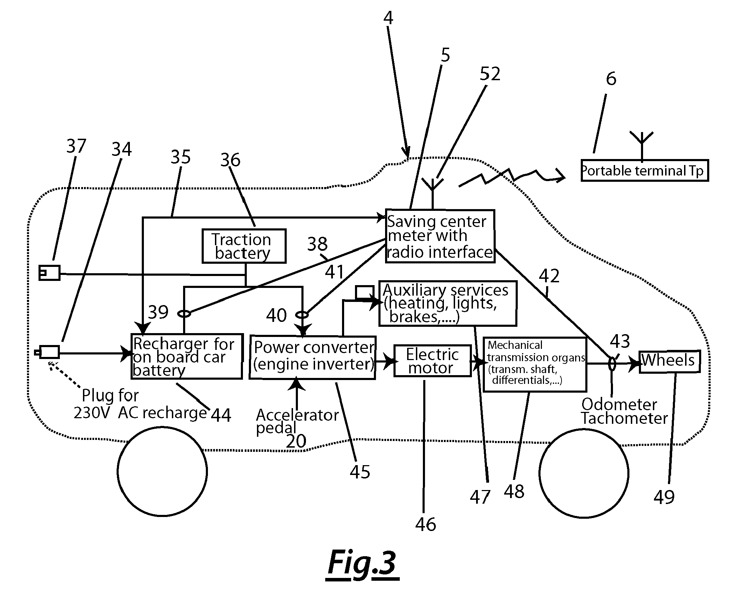

With particular reference to the attached figure 3, the electric car 4 includes:
- a traction battery 36, consisting of a number of electrochemical cells connected in series or in parallel in order to obtain the necessary power to ensure the autonomy of the electric vehicle (the battery 36 is used both to supply the electric car 4 for the traction, and to eventually supply the inverter-booster 15, through the socket 37, when the electric car is at rest in the domestic circle, for example, inside a garage);
- an intelligent charger 44 of the battery 36, possibly provided with CAN bus or dedicated serial interface 35, and powered by a plug 34, which can be connected with the plug 2 or 16;
- a power converter or inverter 45, with which the accelerator pedal 20 of the car 4 is connected and which is suitable to power an electric motor 46 and auxiliary services 47 (heating, lights, braking aid, control panel, air conditioning, etc.) of the car 4, possibly through a second auxiliary battery for the services (not shown in the appended figure 3);
- the mechanical members 48 for transmitting the motion from the electric motor 46 to the wheels 49;
- the saving count 5, equipped with radio interface and antenna 52 and measure devices 39, 40 and 43;
- the portable terminal 6.

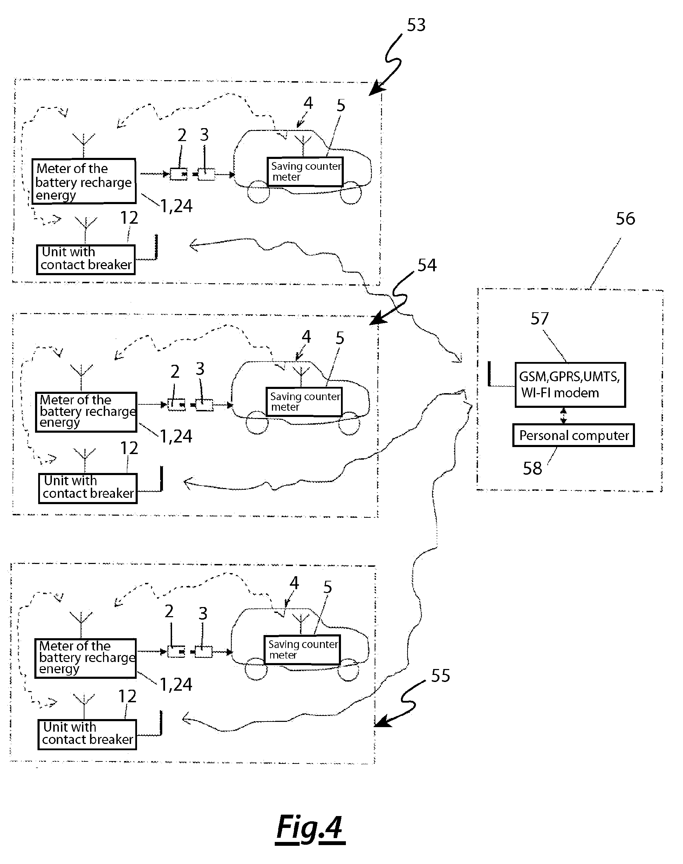

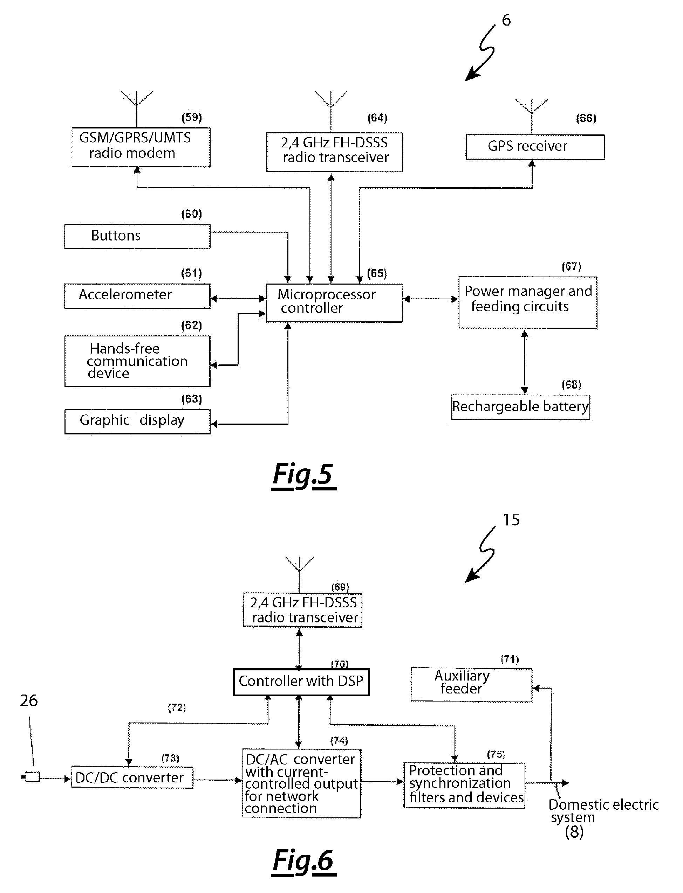

Referring to the appended figure 4, an energy system of distribution which can be implemented through the supply plant according to the invention can be composed of a set of points or stations of energy delivery 53, 54, 55 (such as, for example, a set of garages), each of which contains at least one meter 1, 24 of the recharge energy of the battery 36 and a control unit with circuit breaker 12, provided with GSM/GPRS/UMTS/WI-FI, and a service centre 56, equipped with at least one GSM/GPRS/UMTS/WI-FI modem 57 and a personal computer 58, while, with particular reference to the appended figure 5, each portable terminal 6 is composed of a microprocessor controller 65, a GSM/GPRS/UMTS radio modem 59, a 2.4 GHz FH-DSSS radio transceiver 64, a set of buttons 60, an accelerometer 61, a handsfree communication device 62, a screen or graphic display 63, a set of supply and power management circuits 67 and a rechargeable battery 68.

Referring to the attached figure 6, the inverter-booster 15 is formed by a controller with DSP 70, a 2.4 GHz FH-DSSS radio transceiver 69, an auxiliary power supply 71, a DC/DC converter 73, a DC/AC converter 74 with current-controlled output for system connection, an interface 75 containing the protection and synchronization filters and devices and a connector 26 for connecting to the battery 36 of the electric car 4.

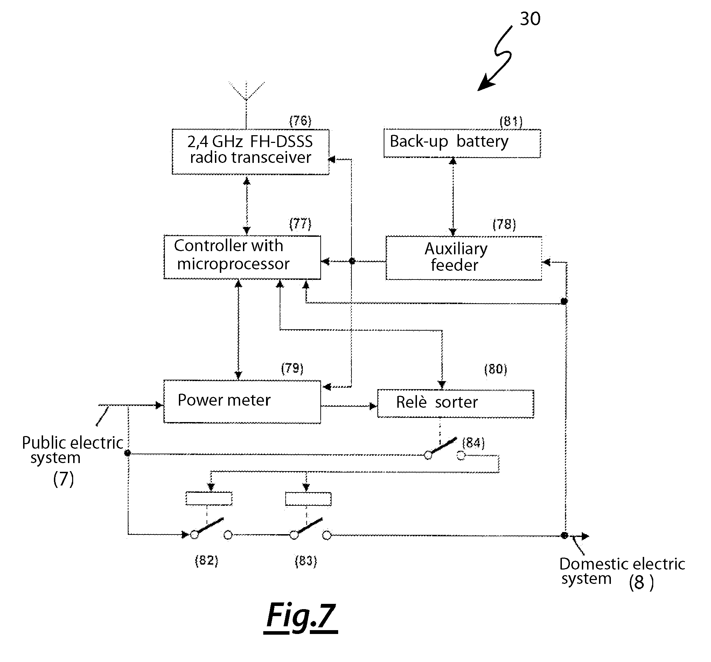

With reference to the attached figure 7, the breaker-meter circuit 30 is composed of a 2.4 GHz FH-DSSS radio transceiver 76, a microprocessor controller 77, an auxiliary power supply 78, a power meter 79, a relay switch 80, with relay contact 84, an auxiliary battery 81 and a pair of remote control switches 82, 83.

The function of the energy supply plant for electric traction vehicles, according to the present invention, is basically as follows.

The electric car 4 regularly operates when in motion consuming the power of the battery 36 for traction and during movement of the car the saving count 5 continuously measures, calculates and reckons the energy saving achieved by the operation of electric car 4 compared to its equivalent powered with fossil fuel, in such a way that, at any time, the user is able to query the aforesaid saving count 5 through the portable terminal 6 and to have real-time information on consumption and energy savings.

The electric car 4 needs to be set at rest for the periodic supplying of electricity; in such a case, the electric car 4 is placed at home (for example, in the garage) and connected through the plug 3 or 19 with the supply socket 2 or 16.

While supplying, the electricity is supplied by the meter 1 or 24, which draws it from the domestic power system 8 and the meter 1 or 24 also reckons the amount of energy delivered to the battery 36 of the electric car 4 and checks that the delivered provided by the socket 2 or 16 coincides with the energy supplied to the battery 36 of the car 4, exchanging radio messages with the saving count 5, mounted inboard of the car 4, which, simultaneously, measures the energy introduced into the battery 36, through the sensor 39 and the line 38, measures the energy passing to the power converter 45, through the sensor 40 and the line 41, as well as the speed of rotation of the wheels 49, through an odometer or tachometer 43 connected with the line 42.

The meter 1 or 24 reckons with precision the energy supplied to the electric car 4 for its use and allows to define as more precisely as possible the energy cost of use of the car itself for the user.

In case the user, by necessity, occasionally uses for the recharge of the battery 36 electricity sockets differ from the sockets 2 or 16 of its own domestic plant, the supply plant recognizes this situation and, ii this case, the saving count 5 measures the energy introduced into the battery 36 associating it with a different socket 2 or 16.

This allows the plant to charge differentiate costs for different recharge events.

In particular, in a plant of the type illustrated in the appended figure 4, a set of positions or stations of energy supply 53, 54, 55 can also be approached by different vehicles 4, each of which takes in at different times from one or the other distributor of the respective station 53, 54, 55.

Since every saving count 5 and very energy meter 1 or 24 is encoded with its own unique address, the plant recognizes each different user and each different recharge point; it is thus possible to charge the consumptions in a differentiate way for each user.

It is also possible to organize a network of distributors as that one shown in the attached figure 4, reckoning and selling the recharging energy to users different each other, each of which can gain access to any recharge point; its own consumption is then charged to each vehicle and/or user 4, irrespective of the charging station 53, 54, 55 chosen.

Indeed, at each recharge, the exchange of messages between the saving count 5 and the meter 1 or 24 of the energy delivered allows to univocally identify the two subjects and to record the recharge energies in the respective memories, combining these values to the related identification codes, thanks to the radio connection existing between the meter 1 or 24 and the control unit 12 of the plant equipped with modem.

Data can be transferred, through an appropriate modem 57, to a remote database hosted in a personal computer 58, at a service centre 56, which handles the policies for charging and/or billing the shares of energy consumed by the various system users; it is clear that it is possible in this way to organize decentralized energy distribution networks, to which users can gain access, which, through the plant described, can exploit a service charge, each with its own custom and differentiate profile, each paying the recharge service as it has been contractually agreed with the service centre 56.

The energy meter 1, 24 also incorporates an electronic switch that is controlled by its own radio interface and is able to enable the supply of electrical power only to the electric vehicles recognized by the system, that is only to the qualified electric vehicles.

In this way it is not possible, for any non-subscribers of the service, to fraudulently make use of the service of recharge of the battery.

Only after the exchange of proper radio authentication messages between the saving count 5 and the meter 1 or 24, the meter itself enables the supply of energy to the electric vehicle.

As yet described before, with particular reference to the attached figures 1 and 2, the recharging system includes a photovoltaic generator consisting of a set of photovoltaic modules 9, a photovoltaic inverter 11, provided with radio interface, and a local unit 12, provided with breaker, energy counter, radio interface and GSM/GPRS/UMTS modem.

The photovoltaic generator is connected with the public power system 7, through a fiscal counter 13, and introduces into the public power system 7 the energy generated in presence of appropriate levels of solar irradiation, while the public power system 7 acts as reservoir of electricity generated and eventually not consumed by the user at the instant of generation.

As known, the incentive policies about the renewable energies of many governments provide the sale of energy to the public distribution companies of electricity at discounted rates, based on an annual budget of the energy produced and the energy consumed; these policies also provide, for small users, the additional advantage of the exchange at spot, namely the deletion of the purchase rate of the consumed energy up to the achievement of an annual fee equal to the generated energy.

The advantage of combining the photovoltaic generation system to the recharge the battery 36 of the electric car 4 is clear, because the system accurately reckons both the amount of energy generated (through the meter built in the unit 12) and the amount of energy consumed by the electric car 4, through the 1 meter or 24, and is therefore able to assign a value to the photovoltaic energy used for the electric car 4.

By properly establishing the value of power of the photovoltaic system, depending on the consumptions of the electric car 4 and the domestic electric appliances 10, it is possible to carry out an energetically self-sufficient integrated system, in which the public power system 7 has the sole purpose of accumulating the photovoltaic energy and return it when required by the electric appliances 10 and the charger 44 of the electric car 4.

In the plant described and illustrated in particular in the attached figure 1, all the elements of the plant exchange radio messages in order to coordinate the measure and record activity of the energy generated and the energy consumed by the electric car 4; the photovoltaic inverter 11 with radio interface measures the energy produced, the breaker unit 12 measures the energy produced by all the inverters 11 of the plant (in case there are two or more inverters 11), the recharge meter 1 measures the energy supplied to the battery 36, while the saving count 5 measures the consumption and saving of the electric car 4.

The unit 12 coordinates the activities of the various devices through the exchange of radio messages and can be controlled and configured both locally, through the portable terminal 6, and remotely, through the GSM/GPRS/UMTS modem with which is provided.

In the more advanced version of the plant, shown in the attached figure 2, the plant provides, additionally to the solution shown in the attached figure 1, two elements introducing other functionalities useful for the power management of the domestic power system, such as the inverter-booster 15 and the breaker-meter circuit 30.

Both these elements are provided with radio interface and exchange radio messages with the other components of the plant, such as the recharge meter 24, the saving count 5, the photovoltaic inverter 11, the unit 12 and the portable terminal 6.

When the electric car 4 is placed at rest in order to recharge the battery 36, both the pair of connectors 16, 19 and the pair of connectors 17, 18 are connected; the first pair of connectors 16, 19 connects the charger 44 to the car 4 with the recharge meter 1 or 24, while the second pair of connectors 17, 18 connects the battery 36 of the car to the inverter-booster 15.

The inverter-15 booster, by verifying that there is enough energy in the battery 36 of the car 4, can drawn it in order to convert it and, in case of need, properly inject it into the domestic power system 8.

For example, if the domestic electric appliances 10, at a given time, require to the power supply a power greater than the maximum contractually available, the inverter-booster 15 can act in order to compensate for the lack by injecting a sufficient amount of power into the power system.

It is for example what would happen in case of in a domestic power system with a 3 KW supply contract a dishwasher and a washing machine during the heating of the water were simultaneously switched on; in such a case, the threshold of 3.3 KW exceed, the counter 14 would disconnect the domestic appliance 8, having exceeded the contractual supply limits.

In presence of the inverter-booster 15 and the breaker-meter circuit 30, the operation is instead the following: the breaker-meter circuit 30 continuously measures the power supplied to the domestic power system 8 by the public power system 7 and in case the maximum contractual value is exceeded, the breaker-meter circuit 30 sends a radio message to the inverter-booster 15, which, if there is availability of energy in the battery 36 of the connected electric car 4, compensates for the lack of power by injecting energy into the power system 8 proportionally to the missing share detected by the breaker-meter circuit 30.

It is obvious that this need may be greater at night, in which the contribution of the photovoltaic generator is zero; indeed, during sunshine day hours, the aforesaid photovoltaic generator, by injecting energy directly into the power system 8, automatically integrates the absorbed power peaks and possibly in excess of the contractual availability.

The breaker-meter circuit 30 also performs another function of domestic energy supply, in case of power failure; indeed, if the breaker-meter circuit 30 detects the failure of the power system 7, it disconnects the domestic power system 8, by physically interrupting the connection of the power system 8 itself from the public power system 7 and, simultaneously, the breaker-meter circuit 30 sends a radio message to the inverter-booster 15 so as to activate the generation functionality thereof (if there is energy availability from the battery 36 of the electric car 4).

If the power failure occurs during the day, when the photovoltaic generator is on, the latter itself cooperates to generate the energy needed to in island supply the domestic power system 8.

It is therefore understood how the devices shown in the attached figure 2 can effectively collaborate in the management of the energy in the power system 8 circle and how the battery electric 36 of the electric car 4 can intervene in order to withstand punctual necessities of the power system itself; in particular, the coordination is made possible by the radio interconnection of the all the various devices.

With particular reference to the abovementioned figure 3, the functioning of the inverter-booster 15 is coordinated with the charger 44 of the battery 36 of the car 4.

The charger 44 is connected with the saving count 5 through the CAN line or simple dedicated serial interface 35 and, through such an interface 35, the saving count 5 and the charger 44 exchange information each other, thanks to which the saving count 5 can manage the functioning policy of the charger 44.

The following strategies are possible.

In the normal operation of the battery 36 of the car 4, the charger 44 doses the supplied energy to the battery 36 coordinating itself with the domestic power system 8, taking into account that in order to charge the battery 36 of the electric car 4 a significant power peak is necessary (for example, if the battery 36 is 20 KWh at least 1 KWp for more than 20 hours or 2 KWp for more than 10 hours is needed).

Since the domestic electric appliance is almost always contractually limited to 3 KWp, it is understood that in absence of adjusting mechanisms the use of other domestic appliances 10 together with the charger 44 of the battery 36 of the car 4 would be problematic.

In the solution described the problem is easily solved: the breaker-meter circuit 30 continuously sends radio messages to the saving count 5 in order to inform it of the peak power committed by the domestic power system 8; in such a way, the saving count 5 continuously sends appropriate messages to the charger 44 in order to adjust its absorbed power at an extent equal to the difference between the power available from the power system 7 and the power absorbed by the other domestic electrical appliances 10.

This mechanism allows to optimally manage the recharge of the battery 36, by inserting at any time into the battery 36 the power actually available, net of the domestic appliances 10.

In case of power withdrawal from the battery 36 due to a necessity of the inverter-booster 15, the charger 44 temporarily and immediately ceases charging process in order to not unreasonably draw from the domestic power system 8 the same energy the inverter-booster 15 is introducing; this function of temporary interruption of the charge can be performed by the charger 44 itself, following the receipt of a block message, through the line 35, by the saving count 5, the latter having received, in turn, a radio message from the inverter-booster 15; or the recharge meter 24, which, possibly provided with a disconnecting switch, may temporarily disconnect its own output 16.

Through the connection 35, the saving count 5 queries the charger 44 about the status of the battery 36 and informs the inverter-booster 15 through adequate radio messages; thus, the inverter-booster 15 may evaluate whether to operate, if and when it is required by the necessities of the domestic power system, depending on the available energy in the battery 36.

With particular reference to the attached figure 5, the portable terminal 6 is supplied by a rechargeable battery 68, for example made of lithium ions, and a microprocessor controller 65 controls the functions of the terminal 6; moreover, the terminal 6 includes a GSM/GPRS/UMTS modem 59, a FH-DSSS radio transceiver 64, a GPS receiver 66, a user interface consisting of a series of buttons 60 and a screen or graphic display 63, an accelerometer 61 and a handsfree communication device 62.

The terminal 6 can be work either as user interface of the saving count or as portable terminal for emergency calls and/or assistance requests and can be used by the user inside the car 4.

If properly fixed inside the car 4, the portable terminal 6, through the accelerometer 61, may send an emergency call and/or assistance request as a result of a vehicle impact, acting as impact sensor.

Particularly, the portable terminal 6 interacts with the other radio devices of the plant shown in figures 1 and 2, by using the FH-DSSS radio transceiver 64, operating for example in the range 2.400 to 2.483 GHz. Following pressing of a few buttons 60 by the user, the controller 65 queries the saving count 5, through radio messages sent by the FH-DSSS radio transceiver 64; the controller 65 then receives, through the transceiver 64, information about the energy consumptions and saving in the form of appropriate radio messages and visualizes such information on the screen or graphic display 63.

In absence of specific requests by the user (for example, by pressing a few buttons 60), the controller 65 periodically retrieves the consumption and saving data and updates the graphic display 63.

In case of simultaneous pressing of two special buttons 60 (highlighted in red and dedicated to the specific function of assistance request), the controller 65 activates an emergency call using its own GSM/GPRS/UMTS radio modem 59 and sends a vocal alarm message and an SMS to a predefined phone number, or a numeric message (through the GPRS/UMTS network) to a service centre 56 equipped with personal computers 58.

As soon as the emergency call procedure detects the connection with a user, the controller 65 activates the handsfree communication device 62, allowing the caller to directly communicate with the called user or the service centre 56 and the terminal 6 immediately sends to the service centre 56 the geographical coordinates detected by the GPS receiver 66 thus allowing user's location.

In this way, the user who is inside the car 4 can use the portable terminal 6 as device of assistance call, function which is especially useful in case of road accident or mechanical aid need.

Another feature of the portable terminal 6 applied to the electric car 4, during the operation of the car outside the garage, is related to the fact that the terminal 6, by regularly interacting with the saving count 5, is updated about the consumptions of the car 4 and in particular about the residual autonomy of the battery 36.

This information can be periodically sent to the service centre 56, which, through proper processing, is able to control the remaining autonomy of the electric car 4 and possibly to advise the user that the discharge of the battery 36 is approaching, or to advise the user about the presence of a recharge point near to the current position of the car 4 and user.

Indeed, the terminal 6 is equipped with a GPS circuit, which allows the controller 65 to periodically send, through the modem 59, to the service centre 56, the information about the position of the electric vehicle on which the terminal 6 is placed.

The portable terminal 6 is also equipped with interface 67 for managing the recharge of the built-in rechargeable battery 36; through a proper accessory, the recharge can also be performed through a 12V socket inside the car 4.

With particular reference to the attached figure 6, the inverter-booster 15 is controlled by a controller 70 with DSP (Digital Signal Processor), which, in addition to oversee the exchange of radio messages with the other radio devices of the figures 1 and 2 through the 2.4 GHz FH-DSSS radio transceiver 69, drives the power devices of the switching converters 73, 74 and 75.

The controller 70, when enabled by appropriate received radio messages, works as follows:
- activates the DC/DC converter 73, which draws power from the battery 36 of the car 4, at constant voltage (in a range between 50 and 300 Volts for example) and converts it into a constant voltage, for example of about 400 volts;
- activates the DC/AC converter 74, characterized by a controlled current output and synchronized on the voltage of the domestic power system 8;
- since the output power of such a stage 74 is equal to the product between the voltage of the public power system 8 and the current coming out from the stage 74, the controller 70 adjusts the current coming out from the stage 74 (and therefore the power coming out from the stage 74) on the basis of what is required by the plant, then dosing the power introduced into the domestic power system 8.

The auxiliary power supply 71 provides service power to the controller 70, its circuits and radio transceiver 69, drawing it from the domestic power system 8; such a power supply 71 presents very low power consumption and draws from the power system 8 no more than 1-2 W, that is the power strictly required to the operation of the circuit control parties and the radio transceiver 69.

The inverter-booster 15 can work in two different ways:
- "grid connected" mode, whereby the output of the converter 74 copies the network voltage present on the domestic power system 8 and injects into the system the sinusoidal current synchronous with the present voltage, and
- "in island" mode, whereby the output of the converter 74 generates, through a numerical summary made by the controller 70, the 50 Hz sinusoidal system voltage, supplying the domestic power system 8 as first generator and injecting into the system the sinusoidal current synchronous with the supplied voltage (this second mode activates when the plant is in the stadium whereby the inverter-booster 15 acts as emergency generator, in case of power failure, and in this operation mode the inverter-booster 15 is the element which gives the system clock to the in island mode, where the possibly present photovoltaic inverter 11 cooperate injecting current into the system and conforming themselves to the voltage imposed by the converter 74.

With specific reference to the attached figure 7, the breaker-meter circuit 30 is driven by a microprocessor controller 77 which, beyond to oversee the exchange of radio messages with the other radio devices of the figures 1 and 2 through the 2.4 GHz FH-DSSS radio transceiver 76, manages the measure of the power and energy absorbed by the domestic power system 8 through the meter 79 and drives the relay switch 80.

The auxiliary power supply 78 provides the service power to the controller 77, the meter 79 and radio transceiver 76, drawing it from the domestic power system 8; such a power supply 78 has a very low power consumption and draws a few watts from the power system 8, i.e. the power strictly required to the operation of the control circuit parts.

The back-up battery 81 is able to supply all the service circuits of the breaker-meter circuit 30 for the time necessary for the proper transients management during the manoeuvres following power failures (in particular, the autonomy should be of at least a few minutes in order to ensure proper management), while the controller 77 continuously manages the measure of the electrical parameters of the domestic power system 8 and, in particular, the electrical current absorbed by the domestic power system 8, the voltage of the domestic power system 8 and the electric power absorbed by the domestic power system 8.

This information is contained within appropriate radio messages and made available to the various radio devices of the plant through the radio transceiver 76.

The controller 77 continuously monitors the public power system 8 and, in case of power failure, immediately turns off the relay switch 80 and its output contact 84; at the same time, the controller 77 sends adequate radio messages through the transceiver 76 to the other devices of the plant (figures 1 and 2) and, in particular, the controller 77 sends a radio message to the inverter-booster 15 so as to signal the need to activate the in island operation mode, in order to individually supply the domestic power system 8.

The sectioning of the domestic power system 8 is performed by one or two power remote control switches 82, 83, whose coils are preferably supplied directly by the public power system 7, through the consent contact of the output relay 84 of the breaker-meter circuit interface 30, so that by switching off the consent relay 84, the remote control switches 82, 83 switch off as well and remain switched off even in case the public power system 7 restores until the contact 84 directly controlled by the controller 77 is also restored.

In this way, the plant reliability is very high and it is ensured the in island operation of the domestic power system 8 has a very low probability of conflicting with the public power system 7 when the latter is restored.

Indeed, only after having received by radio from the inverter-booster 15 the shutdown confirmation, the controller 77 resets the contact 84 allowing the public power system 7 to restart the remote control switches that can thus again feed the domestic power system 8.

The features of the energy supply plant for electric traction vehicles, which is the object of the present invention, as well as the advantages, are clear from the description just made.

It is, finally, clear that many other variations may be made to the energy supply plant in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

## Claims

1. Energy supply plant for electric traction vehicles, comprising at least one electric traction vehicle or electric vehicle (4), which is connected with a domestic power system (8), with which household electric appliances (10) are connected, said domestic power system (8) being connected, in turn, with a low-voltage public power system (7), **characterized in that** said electric vehicle (4) is electrically connected with at least one measure device (1, 24) of the recharge energy of at least one traction battery (36) of said electric vehicle (4), supplied by said domestic power system (8) and suitable to measure the amount of energy supplied to said traction battery (36) and consumed by said electric vehicle (4), said domestic power system (8) being connected with a photovoltaic plant (9, 11), which provides energy and which manages the delivery of said energy to the public power system (7), through at least one electronic control unit (12) suitable to measure the produced amount of energy.

2. Energy supply plant as claim 1, **characterized in that** said electric vehicle (4) is electrically connected with an inverter-booster device (15), which draws electric energy from said battery (36) of the electric vehicle (4) and which introduces at least one portion of said drawn electric energy towards said home electric network (8).

3. Energy supply plant as claim 1, **characterized in that** said electric vehicle (4) includes a saved energy meter or saving count (5), which is connected with said photovoltaic plant (9, 11) and said inverter-booster device (15), so as to measure, calculate and reckon continuously the energy savings achieved by the use of said electric vehicle (4), compared to an equivalent vehicle powered by fossil fuels.

4. Energy supply plant as claim 2, **characterized in that** a breaker-meter circuit (30) is inserted between said domestic power system (8) and said public power system (7), said circuit (30) being able to disconnect household appliances (10) from said public electric network (7) when said household appliances (10) are powered by said photovoltaic plant (9, 11) and by said inverter-booster device (15).

5. Energy supply plant as claim 2, **characterized in that** said traction battery (36) powers said inverter-booster device (15) when said electric vehicle (4) is stationary and at rest.

6. Energy supply plant as claim 1, **characterized in that** a traction battery (36) charger (44) and a power converter or inverter (45) are provided inboard of said electric vehicle (4), said inverter (45) being able to power an electric motor (46) and auxiliary services (47) of said electric vehicle (4).

7. Energy supply plant as claim 3, **characterized in that** said plant comprises a plurality of energy charging or energy distribution stations (53, 54, 55), each of which contains said device (1, 24) for measuring the battery (36) charging energy and an electronic breaker unit (12), and a service centre (56), equipped with at least one modem (57) and a personal computer (58), able to manage the charges of energy amounts consumed by the users of the plant, each of said charging energy measuring devices (1, 24) and each of said energy saving counters (5) being encoded with a unique address, so that the plant recognizes each user and/or each charging station (53, 54, 55), in order to charge consumption differently for each user.

8. Energy supply plant as claim 1, **characterized in that** said plant includes at least one portable terminal (6), essentially comprising a microprocessor controller (65), a modem (59), a radio transceiver (64), a handsfree communication device (62), a screen or graphic display (63), a set of power supply circuits (67) and at least a rechargeable battery (68).

9. Energy supply plant as claim 2, **characterized in that** said inverter-booster device (15) includes a controller (70), a radio transceiver (69), a power supply (71), a DC/DC converter (73), a DC/AC converter (74) with a current-controlled output connected with a supply mains, an interface (75) containing filters and other protective and synchronization devices and a connector (26) for connecting said traction battery (36) of the electric vehicle (4).

10. Energy supply plant as claim 4, **characterized in that** said breaker-meter circuit (30) comprises a radio transceiver (76), a microprocessor controller (77), a power supply (78), a power meter (79), a contact-relay (84) switch (80), a battery (81) and a plurality of contactors (82, 83).

11. Energy supply plant as claims 3 and 4, **characterized in that** said energy saved counter (5), said photovoltaic plant (9, 11), said electronic unit (12), said supplied energy measuring device (1, 24), said inverter-booster device (15) and said breaker-meter circuit (30) exchange together messages and/or data by radio, in order to coordinate the activities of measuring and recording energy produced and consumed by said electric vehicle (4).

12. Energy supply plant as claim 6, **characterized in that** said battery charger (44) supplies energy to said traction battery (36) on the basis of the energy existing in said domestic power system (8) and the power available to said public power system (7) and/or absorbed by said domestic electric appliances (10), said charger (44) being able to temporarily stop the charging when energy is drawn from said traction battery (36) for supplying said inverter-booster device (15).

13. Energy supply plant as claim 8, **characterized in that** said portable terminal (6) exchange messages and/or data via radio with said saved energy counter (5) for displaying the energy consumption of said electric vehicle (4) and the remaining capacity of said traction battery (36) and with a service centre (56), said portable terminal (6) being usable both as a user interface of said saved energy meter (5) and as a terminal for emergency calls and/or for requests for assistance and/or for the localization of the user.
